# EUROPÄISCHE PATENTSCHRIFT

(11) **EP 2 607 765 B1**
(45) Veröffentlichungstag und Bekanntmachung des Hinweises auf die Patenterteilung: **11.01.2017**
(21) Anmeldenummer: 12194604.0
(22) Anmeldetag: 28.11.2012
(51) Int. Cl.: F16L 23/032

(54) **Hybridflansch**
Hybrid flange
Bride hybride

(30) Priorität: 23.12.2011 DE 102011089852
(43) Veröffentlichungstag der Anmeldung: 26.06.2013
(73) Patentinhaber: Eberspächer Exhaust Technology GmbH & Co. KG, 66539 Neunkirchen (DE)
(72) Erfinder: Schmitt, Markus, 66589 Merchweiler (DE); Schmidt, Michael, 66299 Friedrichsthal (DE)
(74) Vertreter: BRP Renaud & Partner mbB Rechtsanwälte Patentanwälte Steuerberater

(56) Entgegenhaltungen:
- EP-A1- 1 351 004
- EP-A2- 1 777 377
- DE-A1- 2 813 535
- DE-A1-102006 016 238
- US-A- 3 275 346
- US-A1- 2006 244 261

## Beschreibung

Die vorliegende Erfindung betrifft einen Hybridflansch, insbesondere für eine Komponente einer Abgasanlage, mit einem Anschlussflansch und einem Stabilisierungsflansch. Die Erfindung betrifft zudem ein Entkopplungselement mit einem derartigen Hybridflansch.

Ein Flansch ist aus dem Stand der Technik hinlänglich bekannt und dient der Verbindung zwischen zwei in der Regel ein Fluid führenden Komponenten bzw. Bauteilen, siehe z.B. EP1351004A1.

Eine derartige Flanschverbindung stellt somit eine mechanische und fluidische Verbindung zwischen den zu verbindenden Komponente bzw. Bauteilen her, wobei der jeweilige Flansch auch einem der Bauteile zugeordnet bzw. als integraler Bestandteil dieses Bauteils ausgebildet sein kann. Hierbei muss der jeweilige Flansch den entsprechenden mechanischen und thermodynamischen Gegebenheiten angepasst werden. Der Flansch für eine Komponente einer Abgasanlage muss beispielsweise für die entsprechend hohen Temperaturen des Abgases und den mechanischen Beanspruchungen, insbesondere die durch thermische Ausdehnungen bewirkten mechanischen Beanspruchungen, geeignet sein. Ein derartiger Flansch wird daher in der Regel aus einem metallischen Werkstoff, beispielsweise aus Stahl hergestellt. Um besagte Eigenschaften zu erfüllen, ist der Flansch gewöhnlich als Gussteil hergestellt. Damit gehen hohe Produktionskosten sowie ein hohes Gewicht einher, die sich sowohl auf den Flansch als auch auf die zugehörige Komponente nachteilig auswirkt. Zudem weist ein derartiger Flansch eine beschränkte Flexibilität auf, was insbesondere bei entsprechenden thermischen Beanspruchungen und die dadurch bewirkten thermischen Ausdehnungen zu Beschädigungen des Flansch und/oder der zugehörigen Komponente und/oder einem anderen mit dem Flansch zusammenwirkenden Flansch führen kann.

Die Erfindung beschäftigt sich mit dem Problem, für einen Flansch der besagten Art und für ein Entkopplungselement mit einem derartigen Flansch eine verbesserte oder andere Ausführungsform anzugeben, die sich insbesondere durch reduzierte Positionskosten sowie ein verringertes Gewicht auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, einen Flansch als Hybridflansch auszubilden bzw. zu gestalten, der zwei oder mehrere zusammenwirkende Teile aufweist. Somit ist es einerseits möglich, die jeweiligen Teile durch ein vereinfachtes Herstellungsverfahren herzustellen und andererseits eine Gewichtsersparnis zu erzielen. Das reduzierte Gewicht bewirkt zudem eine Materialersparnis und führt zur weiteren Senkung der Herstellungskosten.

"Hybrid" bedeutet hierbei insbesondere, dass der Hybridflansch zwei oder mehrere separat hergestellte und zusammenmontierte Teile aufweist, die insbesondere aneinander befestigt sein können. Der Hybridflansch ist also insbesondere kein monolithischer Flansch.

Dem allgemeinen Gedanken entsprechend weist der Hybridflansch einen Anschlussflansch und einen Stabilisierungsflansch auf, wobei der Anschlussflansch insbesondere zum Anschließen des Hybridflansches an einer zugehörigen Komponente bzw. an einem anderen Flansch dient, während der Stabilisierungsflansch insbesondere der Stabilisierung des Anschlussflansches dient. Erfindungsgemäß weist der Anschlussflansch ein Rohrstück auf, das von einer Innenseite des Anschlussflansches absteht, die dem Stabilisierungsflansch zugewandt ist. Die zugehörige Komponente kann insbesondere mit Hilfe des Rohrstücks, insbesondere durch Verschweißen, mit dem Hybridflansch verbunden werden, wobei das Rohrstück für ein entsprechendes Fluid, insbesondere für das entsprechende Abgas, durchströmbar ist. Der Stabilisierungsflansch weist eine Öffnung auf, die das Rohrstück umschließt, während der Stabilisierungsflansch mit seiner dem Anschlussflansch zugewandten Innenseite am Anschlussflansch abgestützt ist. Die Umschließung des Rohrstücks mittels der Öffnung des Stabilisierungsflansches stellt eine Stabilisierung des Anschlussflansches in Form einer Materialverstärkung dar. Hierdurch können der Anschlussflansch und der Stabilisierungsflansch eine geringere Dicke bzw. Materialstärke aufweisen, als ein als Gussteil konzipierter Flansch, wodurch besagte Gewichtsersparnis erreicht wird. Zudem können der Anschlussflansch und der Stabilisierungsflansch durch einfache Herstellungsverfahren hergestellt werden, womit auch die Herstellungskosten gesenkt sind.

Der Hybridflansch weist folglich den Anschlussflansch und den Stabilisierungsflansch auf, die als separate Teile hergestellt sind.

Das Rohrstück steht bevorzugt axial von der Innenseite des Anschlussflansches ab. Dementsprechend sind besagte Innenseiten des Anschlussflansches und des Stabilisierungsflansches axiale Innenseiten. Zudem weisen das Rohrstück und die Öffnung in bevorzugter Weise eine koaxiale Anordnung auf, wobei die Öffnung und das Rohrstück bevorzugt einen runden bzw. kreisförmigen Querschnitt aufweisen. Ferner ist die Öffnung bei bevorzugten Ausführungsformen mittig am Stabilisierungsflansch ausgebildet.

Die Abstützung der Innenseite des Stabilisierungsflansches an der Innenseite des Anschlussflansches kann durch wenigstens ein Abstützelement, etwa mittels zumindest einer Unterlegscheibe, realisiert sein. Zweckmäßig ist die Abstützung jedoch derart realisiert, dass die Innenseite des Stabilisierungsflansches an der Innenseite des Anschlussflansches direkt anliegt. Das heißt, dass sich die Innenseiten zumindest bereichsweise kontaktieren. Eine derartige Abstützung bewirkt zusätzlich zur Umschließung des Rohrstücks durch die Öffnung eine Verstärkung des Hybridflansches und folglich eine zusätzliche Stabilisierung.

Zweckmäßig sind der Anschlussflansch und der Stabilisierungsflansch aus unterschiedlichen Materialien hergestellt. Dabei können Materialien gewählt werden, die den entsprechenden Erfordernissen genügen. Der Anschlussflansch kann z.B. aus einem Werkstoff hergestellt sein, der eine vereinfachte Verbindung des Hybridflansches mit der zugehörigen Komponente erlaubt. Der Stabilisierungsflansch kann hingegen aus einem Werkstoff hergestellt sein, der eine hohe Steifigkeit bzw. eine hohe Härte aufweist, um eine verbesserte Stabilität bzw. Festigkeit des Hybridflansches zu erreichen. Der Anschlussflansch und der Stabilisierungsflansch können also ohne Beschränkung der Allgemeinheit aus einem Ferrit bzw. einem Austenit hergestellt sein. Dabei sind die Flansche bevorzugt durch ein entsprechend günstiges Herstellungsverfahren hergestellt. Der Stabilisierungsflansch und/oder der Anschlussflansch sind vorzugsweise mit einem Umformverfahren, insbesondere durch ein Pressverfahren, beispielsweise als Stanzteile, hergestellt.

Eine zusätzliche Stabilisierung des Anschlussflansches, insbesondere des Rohrstücks, kann dadurch erreicht werden, dass das Rohrstück zumindest eine Stufe aufweist, bzw. stufenartig ausgebildet ist. Hierbei verläuft die Stufe zweckmäßig in radialer Richtung, so dass das Rohrstück entlang der Richtung, in die es sich streckt, also insbesondere entlang der Axialrichtung, mindestens zwei Bereichen mit unterschiedlichen Durchmessern bzw. unterschiedlich großen Querschnitten aufweist. Eine derartige Stufe bewirkt eine erhöhte Festigkeit bzw. Stabilität gegenüber entsprechend senkrecht zur Axialrichtung bzw. entlang der Radialrichtung wirkenden Kräften. Dementsprechend kann bei einem derartig ausgebildeten Anschlussflansch bzw. bei einem derartig ausgebildeten Hybridflansch wahlweise die Stabilität erhöht werden oder bei einer vergleichbaren Stabilität das Gewicht bzw. die Menge des entsprechenden Werkstoffs eingespart werden.

Bei einer bevorzugten Ausführungsform weist der Anschlussflansch einen von der Innenseite abstehenden Kragen auf, der vom Rohrstück beabstandet angeordnet ist. Der Kragen des Anschlussflansches dient hierbei insbesondere dem Zweck, dem Stabilisierungsflansch einen Rahmen zu geben bzw. einen derartigen Rahmen für den Stabilisierungsflansch zu schaffen. Dementsprechend verläuft der Kragen insbesondere an einem außenliegenden Rand des Anschlussflansches, wobei er in der Umfangsrichtung vollständig oder teilweise umläuft. Zudem kann eine entlang der Axialrichtung verlaufende Höhe des Kragens größer sein als die axiale Ausdehnung des Stabilisierungsflansches bzw. als die Dicke des Stabilisierungsflansches. Mit anderen Worten, der Kragen überragt den Stabilisierungsflansch, insbesondere wenn sich die Innenseiten kontaktieren.

Zweckmäßig sind die Innenseite des Anschlussflansches und die Innenseite des Stabilisierungsflansches komplementär ausgebildet. Insbesondere sind die Innenseite des Anschlussflansches und die Innenseite des Stabilisierungsflansches derart ausgebildet, dass der Stabilisierungsflansch radial zwischen dem Kragen und dem Rohrstück angeordnet ist. Zudem weist der Stabilisierungsflansch bevorzugt einen außenliegenden Rand auf, dessen Verlauf in der Umfangsrichtung komplementär zum Verlauf des Kragens ausgebildet bzw. geformt ist, so dass der Kragen den Stabilisierungsflansch in den entsprechenden Bereichen umschließt. Bevorzugt steht der Kragen in axialer Richtung, das heißt in Richtung des Rohrstücks von der Innenseite des Anschlussflansches ab. Somit wird eine zusätzliche Verstärkung des Hybridflansches realisiert, die eine erhöhte Beständigkeit des Hybridflansches gegenüber radial wirkenden Kräften zur Folge hat.

Bevorzugt werden Ausführungsformen, bei denen der Stabilisierungsflansch an seiner vom Anschlussflansch abgewandten Außenseite einen Öffnungskragen aufweist, der die Öffnung zumindest teilweise umschließt. Der Öffnungskragen steht vorzugsweise in die gleiche axialer Richtung ab wie das Rohrstück, so dass der Öffnungskragen das Rohrstück zumindest teilweise umschließt. Auch der Öffnungskragen bewirkt eine zusätzliche Verstärkung des Hybridflansches, wobei der Öffnungskragen zweckmäßig eine axiale Ausdehnung bzw. Höhe aufweist, die kleiner ist als die Höhe bzw. axiale Ausdehnung des Rohrstücks. Vorzugsweise steht der Öffnungskragen axial nicht über den vorstehend genannten optionalen Kragen des Anschlussflansches vor.

Die Verbindung zwischen dem Hybridflansch und einem anderen Flansch bzw. einem anderen Bauteil kann beispielsweise mit Hilfe zumindest eines Verbindungsbereichs realisiert sein, der durch den Anschlussflansch und/oder den Stabilisierungsflansch ausgebildet ist. Insbesondere kann der zumindest eine Verbindungsbereich radial abstehend am Anschlussflansch und/oder am Stabilisierungsflansch ausgeformt sein. Vorteilhaft bilden jeweils ein Verbindungsbereich des Stabilisierungsflansches und des Anschlussflansches einen solchen Verbindungsbereich des Hybridflansches aus. Dabei liegen der Verbindungsbereich des Stabilisierungsflansches und der zugehörige Verbindungsbereich des Anschlussflansches bevorzugt aneinander an, um insbesondere eine stabile Bauweise des Verbindungsbereiches zu gewährleisten. Dadurch werden der Anschlussflansch und der Stabilisierungsflansch beim Verbinden des Hybridflansches mit dem anderen Bauteil bzw. den anderen Flansch gegeneinander gedrückt, was zu einer Stabilisierung des Hybridflansches führt.

Bevorzugt weisen sowohl der Anschlussflansch als auch der Stabilisierungsflansch mehrere derartige Verbindungsbereiche auf, die in der Umfangsrichtung verteilt angeordnet sind Dementsprechend sind auch die Verbindungsbereiche des Hybridflansches in der Umfangsrichtung verteilt angeordnet. Dies ermöglicht insbesondere eine stabile Verbindung des Hybridflansches mit dem anderen Flansch bzw. dem anderen Bauteil. Darüber hinaus ist hierdurch im Vergleich zu einem in Umfangsrichtung durchgehenden Verbindungsbereich eine erhebliche Material- und somit Gewichtsersparnis möglich.

Prinzipiell können die Verbindungsbereiche in der Umfangsrichtung gleichmäßig verteilt sein. Bei vorteilhaften Varianten sind die Verbindungsbereiche in der Umfangsrichtung ungleichmäßig verteilt. Das heißt also, dass der jeweilige Verbindungsbereich in Umfangsrichtung einen unterschiedlichen Abstand zu den direkt benachbarten Verbindungsbereichen aufweisen kann. Hierdurch kann zusätzlich zur stabilen Verbindung des Hybridflansches ein Verspannen der Anschlussflansches und des Stabilisierungsflansches relativ zueinander erreicht werden, was insbesondere zu einer Versteifung und/oder Stabilisierung des Hybridflansches führt.

Bevorzugt ist der jeweilige Verbindungsbereich des Hybridflansches von einem solchen Kragen umgeben. Auch sind Ausgestaltungen vorteilhaft, bei denen die Verbindungsbereiche des Hybridflansches von einem solchen gemeinsamen Kragen umgeben sind. Dabei kann dieser Kragen auch die Bereiche außerhalb der Verbindungsbereiche umgeben. Damit ist eine Stabilisierung der Verbindungsbereiche erreicht, auch wenn die Verbindungsbereich des Hybridflansches bzw. die zugehörigen Verbindungsbereiche des Anschlussflansches und/oder des Stabilisierungsflansches eine geringe Materialstärke ausweisen. Dadurch ist es also insbesondere möglich, den Anschlussflansch und/oder den Stabilisierungsflansch dünnwandig herzustellen.

Der jeweilige Verbindungsbereich kann dabei z.B. zur Verschraubung des Hybridflansches bzw. der zugehörigen Komponente mit dem anderen Flansch bzw. mit dem anderen Bauteil dienen. Dementsprechend kann der jeweilige Verbindungsbereich eine Verbindungsöffnung bzw. eine Schrauböffnung aufweisen, durch die eine Schraube bzw. ein Element einer Schraubverbindung durchführbar ist. Hiermit kann der Hybridflansch bzw. die zugehörige Komponente beispielsweise mit einem Rohr, einem Gehäuse, einem Topf, einem Katalysator und dergleichen verbunden werden, wobei diese Bauteile, wie bereits erwähnt, ihrerseits einen Flansch, insbesondere einen derartigen Hybridflansch aufweisen können.

Bei bevorzugten Ausführungsformen sind der Anschlussflansch und der Stabilisierungsflansch aneinander befestigt. Eine derartige Befestigung kann beispielsweise durch Zusammenpressen des Anschlussflansches mit dem Stabilisierungsflansch erreicht werden. Insbesondere können der Stabilisierungsflansch und der Anschlussflansch miteinander verschweißt sein. Hierzu kann beispielsweise eine vorzugsweise umlaufende Schweißnaht vorgesehen sein, die das Rohrstück mit dem Öffnungskragen verbindet.

Der Hybridflansch und dementsprechend der Anschlussflansch und der Stabilisierungsflansch können im Allgemeinen eine beliebige Form aufweisen. Insbesondere können der Anschlussflansch und der Stabilisierungsflansch gekrümmt ausgebildet sein bzw. eine gekrümmte Form aufweisen. Bevorzugt sind jedoch Ausführungsformen, bei denen sich der Anschlussflansch und der Stabilisierungsflansch entlang paralleler Ebenen erstrecken, wobei diese Ebenen zweckmäßig senkrecht zur Axialrichtung verlaufen. Dementsprechend sind der Anschlussflansch und der Stabilisierungsflansch eben geformt bzw. ausgebildet, wobei das Rohrstück und gegebenenfalls der Kragen und/oder der Öffnungskragen von der entsprechenden Ebene absteht/abstehen.

Gemäß einer vorteilhaften Weiterbildung der erfindungsgemäßen Lösung ist der Hybridflansch Bestandteil eines Entkopplungselements. Das Entkopplungselement kommt vorwiegend bei einer Abgasanlage zum Einsatz und dient insbesondere dem Zweck Vibrationen bzw. Schwingungen zwischen der Abgasanlage und einer zugehörigen Brennkraftmaschine zu entkoppeln. Dementsprechend kann das Entkopplungselement als Bestandteil eines Abgasstrangs der Abgasanlage zwischen einem Schalldämpfer und einem Katalysator der Abgasanlage angeordnet sein. Das Entkopplungselement weist nun den Hybridflansch auf, wobei der Hybridflansch an einem Endabschnitt des Entkopplungselements angeordnet ist. Das Entkopplungselement und der Hybridflansch, insbesondere der Anschlussflansch des Hybridflansches, sind hierbei auf geeigneter Weise miteinander verbunden. Beispielsweise sind der Hybridflansch und das Entkopplungselement miteinander verschweißt. Auch sind Ausführungsformen vorstellbar, bei denen besagter Endabschnitt des Entkopplungselements und der Anschlussflansch des Hybridflansches einteilig bzw. monolithisch ausgebildet sind.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine räumliche Seitenansicht eines Entkopplungselements mit einem Hybridflansch,
- Fig. 2: eine räumliche Ansicht des Hybridflansches,
- Fig. 3: eine Explosionsdarstellung des Hybridflansches.

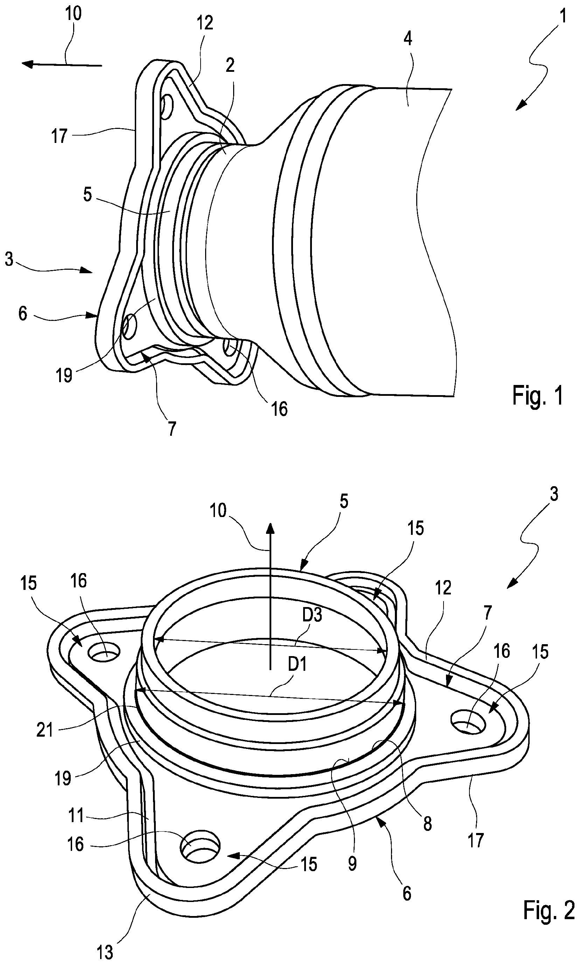

In der Fig. 1 ist eine als Entkopplungselement 1 ausgebildete Komponente 1 für eine Abgasanlage zu sehen, das an einem axialen Endabschnitt 2 einen Hybridflansch 3 aufweist. Das Entkopplungselement 1 kann beispielsweise Bestandteil einer Abgasanlage für eine Brennkraftmaschine eines Kraftfahrzeuges sein, das in einem Abgasstrang der Abgasanlage angeordnet ist. Das Entkopplungselement 1 ist dementsprechend vom Abgas der Brennkraftmaschine durchströmbar, wobei das Abgas durch ein Gehäuse 4 über den axialen Endabschnitt 2 und dem Hybridflansch 3 zu einem mit Hilfe des Hybridflansches 3 mit dem Entkopplungselement 1 verbundenen Bauteil, beispielweise einem Schalldämpfer oder einem Katalysator strömen kann, wobei das andere Bauteil ebenfalls einen Flansch, insbesondere einen solchen Hybridflansch 3 aufweisen kann, mit Hilfe derer die Verbindung realisiert ist. Die Verbindung zwischen dem Endabschnitt 2 und dem Hybridflansch 3 ist beispielsweise durch eine Verschweißung des Endabschnitts 2 mit einem Rohrstück 5 des Hybridflanschs 3 realisiert. Das Rohrstück 5 ist hierbei Bestandteil eines Anschlussflansches 6 des Hybridflansches 3, wobei der Hybridflansch 3 zudem einen Stabilisierungsflansch 7 aufweist.

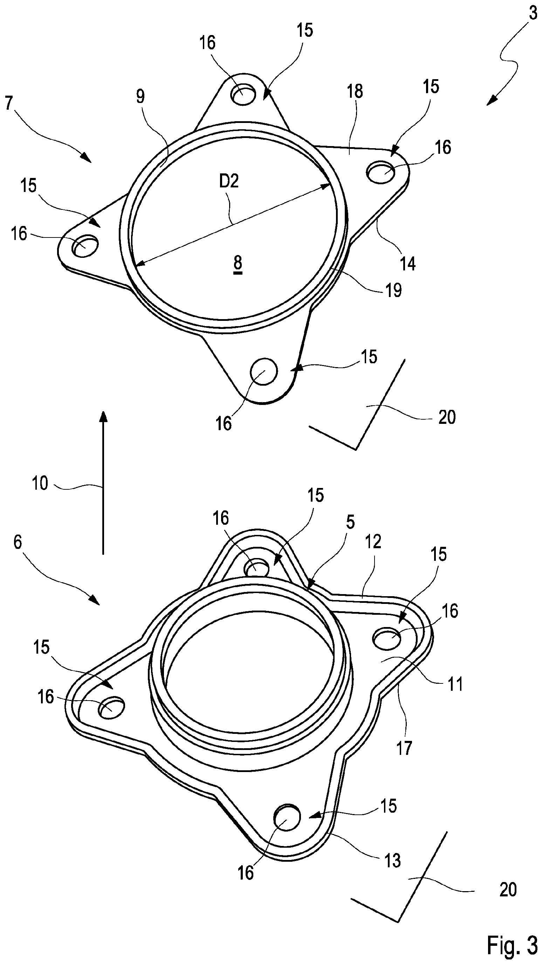

Wie insbesondere in den Fig. 2 und 3 ersichtlich, weist der Stabilisierungsflansch 7 des Hybridflanschs 2 eine Öffnung 8 auf, die mittig im Stabilisierungsflansch 7 angeordnet ist und das Rohrstück 5 gänzlich umschließt. Das Rohrstück 5 und die Öffnung 8 sind kreisförmig ausgebildet, so dass ein erster Außendurchmesser D1 des Rohrstücks 5 im Umschließungsbereich der Öffnung 8 im Wesentlichen einem Innendurchmesser D2 der Öffnung 8 entspricht. Folglich kontaktiert eine dem Rohrstück 8 zugewandte Innenkontur 9 der Öffnung 8 des Stabilisierungsflansches 7 das Rohrstück 5.

Das Rohrstück 5 ist entlang der mit einem Pfeil 10 angedeuteten Axialrichtung stufenartig ausgebildet, so dass das Rohrstück 5 entlang der Axialrichtung nachfolgend auf besagtem ersten Durchmesser D1 einen zweiten Durchmesser D3 aufweist, der kleiner ist als der erste Durchmesser D1. Das Rohrstück 5 steht zudem von einer dem Stabilisierungsflansch 7 zugewandten Innenseite 11 des Anschlussflansch 6 ab. Der Anschlussflansch 6 weist zudem einen Kragen 12 auf, der von der Innenseite 11 des Anschlussflansch 6 in Richtung des Rohrstücks 5 und somit in axialer Richtung 10 absteht und dabei entlang des gesamten außenliegenden Randes 13 des Anschlussflansches 6 verläuft. Somit ist radial zwischen dem Kragen 12 und dem Rohrstück 5 eine Vertiefung ausgebildet, in der der Stabilisierungsflansch 7 angeordnet ist. Dabei ist die axiale Ausdehnung des Kragens 12 größer als die axiale Ausdehnung des Stabilisierungsflansch 7 (vgl. Fig. 1). Zudem liegt eine dem Anschlussflansch 6 zugewandte Innenseite 14 des Stabilisierungsflansches 7 an der Innenseite 11 des Anschlussflansches 6 an, wodurch sich die Innenseiten 11, 14 flächig kontaktieren.

Damit der Stabilisierungsflansch 7 in besagte, radial zwischen dem Kragen 12 und dem Rohrstück 5 ausgebildete, Vertiefung passt, sind der Anschlussflansch 6 und der Stabilisierungsflansch 7, insbesondere die Innenseiten 11, 14, komplementär ausgebildet. Somit füllt der Stabilisierungsflansch 7 die Vertiefung im radialen Bereich zwischen dem Kragen 12 und dem Rohrstück 5 im Wesentlichen aus. Des Weiteren weisen der Anschlussflansch 6 und der Stabilisierungsflansch 7 jeweils vier Verbindungsbereiche 15 auf, die radial nach außen abstehen und Verbindungsbereiche 15 des Hybridflansches 3 ausbilden. Der jeweilige Verbindungsbereich 15 weist eine Verbindungsöffnung 16 auf, wobei die Verbindungsöffnungen 16 der jeweiligen Verbindungsbereiche 15 kreisförmig ausgebildet sind und die gleiche Größe aufweisen. Der Anschlussflansch 6 und der Stabilisierungsflansch 7 sind derart relativ zueinander angeordnet, dass jeweils eine Verbindungsöffnung 16 des Stabilisierungsflansches 7 und des Anschlussflansches 6 koaxial angeordnet sind. Damit kann der Hybridflansch 3 bzw. eine zugehörige Komponente, insbesondere das in Fig. 1 gezeigte Entkopplungselement 1, an einer vom Stabilisierungsflansch 7 abgewandten Rückseite 17 des Anschlussflansches 6 beispielsweise mittels einer Verschraubung mit einem anderen Bauteil, beispielsweise mit einem Flansch des anderen Bauteils, verbunden werden. Dadurch werden auch die Innenseiten 11, 14 gegeneinander gedrückt und der Hybridflansch 3 dementsprechend stabilisiert. Bei dem hier gezeigten Beispiel sind die Verbindungsbereiche 15 ungleichmäßig, das heißt mit unterschiedlichen Abständen in der Umfangsrichtung verteilt.

Der Stabilisierungsflansch 7 weist auf einer vom Anschlussflansch 6 abgewandten Außenseite 18 einen Öffnungskragen 19 auf, der die Öffnung 8 des Stabilisierungsflansches 7 gänzlich umgibt. Somit ist die Öffnung 8 des Stabilisierungsflansches 7 innerhalb des Öffnungskragens 19 ausgebildet. Der Öffnungskragen 19 steht zudem in axialer Richtung 10 in Richtung des Rohrstücks 5 ab. Dementsprechend umschließt der Öffnungskragen 19 das Rohrstück 5 in dem der Innenseite 14 des Anschlussflansches 6 benachbarten Bereich des Rohrstücks 5. Wobei die Innenkontur 9 der Öffnung 8 bzw. des Öffnungskragens 19 das Rohrstück 5 kontaktiert.

Der Anschlussflansch 6 und der Stabilisierungsflansch 7 können durch geeignete Mittel aneinander befestigt sein. Hierzu kann beispielsweise eine das Rohrstück 5 mit dem Öffnungskragen 19 verbindende, entlang der gesamten Umfangsrichtung verlaufende Schweißnaht 21 vorgesehen sein, entlang derer der Anschlussflansch 6 und der Stabilisierungsflansch 7 aneinander verschweißt und dementsprechend befestigt sind.

Wie insbesondere den Fig. 1 und 2 zu entnehmen ist, erstrecken sich der Anschlussflansch 6 und der Stabilisierungsflansch 7 entlang paralleler Ebenen 20, die senkrecht zur Axialrichtung 10 verlaufen. Dementsprechend weisen der Anschlussflansch 6 und der Stabilisierungsflansch 7 ebene Grundformen auf, von denen das Rohrstück 5 sowie der Kragen 12 bzw. der Öffnungskragen 19 in axialer Richtung 10 abstehen.

Mit Hilfe des hier beispielhaft dargestellten Hybridflansches 3 ist es möglich, die Bestandteile des Hybridflansches 3, das heißt den Anschlussflansch 6 und den Stabilisierungsflansch 7, durch einfache Herstellungsverfahren herzustellen. Insbesondere können der Anschlussflansch 6 und der Stabilisierungsflansch 7 durch Pressverfahren, insbesondere durch Stanzverfahren hergestellt sein. Somit werden der Herstellungssaufwand und die Herstellungskosten, beispielsweise im Vergleich zu einem durch ein Gussverfahren hergestellten Flansch, reduziert. Des Weiteren können der Anschlussflansch 6 und der Stabilisierungsflansch 7 aus unterschiedlichen Materialien bzw. Werkstoffen hergestellt sein. So kann der Anschlussflansch 6 beispielsweise aus einem Werkstoff hergestellt sein, der eine geeignete und vereinfachte Verbindung zwischen dem Hybridflansch 3 und der zugehörigen Komponente 1 und/oder zwischen dem Hybridflansch 3 und dem anderen Bauteil gewährleistet. Da der Stabilisierungsflansch 7 vorwiegend der Stabilisierung des Hybridflansches 3 dient, ist der Stabilisierungsflansch 7 bevorzugt aus einem Werkstoff hergestellt, der eine hohe Festigkeit aufweist.

## Patentansprüche

1. Hybridflansch (3), insbesondere für eine Komponente (1) einer Abgasanlage, mit einem Anschlussflansch (6) und einem Stabilisierungsflansch (7), wobei
- der Anschlussflansch (6) an einer dem Stabilisierungsflansch (7) zugewandten Innenseite (11) ein davon abstehendes Rohrstück (5) aufweist,
- der Stabilisierungsflansch (7) eine Öffnung (8) aufweist, die das Rohrstück (5) umschließt,
- der Stabilisierungsflansch (7) mit einer dem Anschlussflansch (6) zugewandten Innenseite (14) am Anschlussflansch (6) abgestützt ist,
- der Hybridflansch (3) zumindest einen radial nach außen abstehenden Verbindungsbereich (15) aufweist, der durch den Anschlussflansch (6) und/oder den Stabilisierungsflansch (7) ausgebildet ist und mit dem der Hybridflansch (3) mit einem anderen Flansch verbindbar ist
**dadurch gekennzeichnet,**
- **dass** zumindest drei solche Verbindungsbereiche (15) vorgesehen sind, die in Umfangsrichtung ungleichmäßig angeordnet sind.

2. Hybridflansch nach Anspruch 1,
**dadurch gekennzeichnet,**
**dass** die Innenseite (14) des Stabilisierungsflansches (7) an der Innenseite (11) des Anschlussflansches (6) anliegt.

3. Hybridflansch nach Anspruch 1 oder 2,
**dadurch gekennzeichnet,**
**dass** der Anschlussflansch (6) und der Stabilisierungsflansch (7) aus unterschiedlichen Werkstoffen hergestellt sind.

4. Hybridflansch nach einem der Ansprüche 1 bis 3,
**dadurch gekennzeichnet,**
**dass** das Rohrstück (5) zumindest eine Stufe aufweist.

5. Hybridflansch nach einem der Ansprüche 1 bis 4,
**dadurch gekennzeichnet,**
**dass** der Anschlussflansch (6) beabstandet vom Rohrstück (5), insbesondere an einem außenliegenden Rand (13), einen von der Innenseite (11) abstehenden Kragen (12) aufweist, der in der Umfangsrichtung teilweise oder vollständig umläuft.

6. Hybridflansch nach einem der Ansprüche 1 bis 5,
**dadurch gekennzeichnet,**
**dass** die Innenseite (11) des Anschlussflansches (6) und die Innenseite (14) des Stabilisierungsflansches (7) komplementär ausgebildet sind, insbesondere derart, dass der Stabilisierungsflansch (7) zwischen dem Kragen (12) und dem Rohrstück (5) angeordnet ist.

7. Hybridflansch nach einem der Ansprüche 1 bis 6,
**dadurch gekennzeichnet,**
**dass** der Stabilisierungsflansch (7) an seiner vom Anschlussflansch (6) abgewandten Außenseite (18) einen die Öffnung (8) zumindest teilweise umschließenden Öffnungskragen (19) aufweist, der das Rohrstück (5) zumindest teilweise umschließt.

8. Hybridflansch nach einem der Ansprüche 1 bis 7,
**dadurch gekennzeichnet,**
**dass** zumindest zwei solche und voneinander beabstandete Verbindungsbereiche (15) vorgesehen sind.

9. Hybridflansch nach einem der Ansprüche 1 bis 8,
**dadurch gekennzeichnet,**
**dass** die zumindest zwei Verbindungsbereiche (15) in Umfangsrichtung verteilt angeordnet sind.

10. Hybridflansch nach einem der Ansprüche 1 bis 9,
**dadurch gekennzeichnet,**
**dass** zumindest ein solcher Verbindungsbereich (15) eine Verbindungsöffnung (16) aufweist.

11. Hybridflansch nach einem der Ansprüche 1 bis 10,
**dadurch gekennzeichnet,**
**dass** sich der Anschlussflansch (6) und/oder der Stabilisierungsflansch (7) entlang paralleler Ebenen erstrecken.

12. Hybridflansch nach einem der Ansprüche 1 bis 11,
**dadurch gekennzeichnet,**
**dass** der Anschlussflansch (6) und der Stabilisierungsflansch (7) aneinander befestigt sind.

13. Entkopplungselement (1) für eine Abgasanlage mit einem Hybridflansch (3) nach einem der Ansprüche 1 bis 12.

## Claims

1. Hybrid flange (3), in particular for a component (1) of an exhaust system with a connecting flange (6) and a stabilising flange (7), where
- the connecting flange (6) has, on an inner side (11) facing the stabilising flange (7), a pipe section (5) protruding from it,
- the stabilising flange (7) has an opening (8) which encloses the pipe section (5),
- the stabilising flange (7) is supported at the connecting flange (6) by an inner side (14) facing the connecting flange (6),
- the hybrid flange (3) has at least one joint area (15) radially protruding outwards which is constructed from the connecting flange (6) and/or the stabilising flange (7) and can be connected by the hybrid flange (3) to another flange
**characterised in that**
- at least three such joint areas (15) are provided which are unevenly arranged in circumferential direction.

2. Hybrid flange according to Claim 1,
**characterised in that**
the inner side (14) of the stabilising flange (7) sits against the inner side (11) of the connecting flange (6).

3. Hybrid flange according to Claim 1 or 2,
**characterised in that**
the connecting flange (6) and the stabilising flange (7) are manufactured from different materials.

4. Hybrid flange according to any one of Claims 1 to 3,
**characterised in that**
the pipe section (5) has at least one level.

5. Hybrid flange according to any one of Claims 1 to 4,
**characterised in that**
the connecting flange (6) spaced from the pipe section (5), in particular at an external edge (13), has a collar (12) protruding from the inner side (11) which runs partially or fully in circumferential direction.

6. Hybrid flange according to any one of Claims 1 to 5,
**characterised in that**
the inner side (11) of the connecting flange (6) and the inner side (14) of the stabilising flange (7) are constructed to complement each other, in particular in such a way that the stabilising flange (7) is arranged between the collar (12) and the pipe section (5).

7. Hybrid flange according to any one of Claims 1 to 6,
**characterised in that**
the stabilising flange (7) has, at its outer side (18) facing away from the connecting flange (6), an opening collar (19) at least partially enclosing the opening (8) which at least partially encloses the pipe section (5).

8. Hybrid flange according to any one of Claims 1 to 7,
**characterised in that**
at least two such joint areas (15) are provided which are spaced apart.

9. Hybrid flange according to any one of Claims 1 to 8,
**characterised in that**
at least two joint areas (15) are distributed in circumferential direction.

10. Hybrid flange according to any one of Claims 1 to 9,
**characterised in that**
at least one such joint area (15) has a connecting opening (16).

11. Hybrid flange according to any one of Claims 1 to 10,
**characterised in that**
the connecting flange (6) and/or the stabilising flange (7) extend along parallel planes.

12. Hybrid flange according to any one of Claims 1 to 11,
**characterised in that**
the connecting flange (6) and the stabilising flange (7) are attached to each other.

13. Isolating element (1) for an exhaust system with a hybrid flange (3) according to any one of Claims 1 to 12.

## Revendications

1. Bride hybride (3), en particulier pour un composant (1) d'un système d'échappement, comprenant une bride de raccordement (6) et une bride de stabilisation (7), dans laquelle
- la bride de raccordement (6) présente, au niveau d'un côté intérieur (11) tourné vers la bride de stabilisation (7), une pièce tubulaire (5) en faisant saillie,
- la bride de stabilisation (7) présente une ouverture (8), qui entoure la pièce tubulaire (5),
- la bride de stabilisation (7) est en appui, par un côté intérieur (14) tourné vers la bride de raccordement (6), au niveau de la bride de raccordement (6),
- la bride hybride (3) présente au moins une zone de liaison (15) faisant saillie radialement vers l'extérieur, laquelle est réalisée par la bride de raccordement (6) et/ou la bride de stabilisation (7) et à laquelle la bride hybride (3) peut être reliée à une autre bride,
**caractérisée en ce**
- **qu'**au moins trois zones de liaison (15) de ce type sont prévues, lesquelles sont disposées de manière irrégulière dans la direction périphérique.

2. Bride hybride selon la revendication 1,
**caractérisée en ce**
**que** le côté intérieur (14) de la bride de stabilisation (7) repose au niveau du côté intérieur (11) de la bride de raccordement (6).

3. Bride hybride selon la revendication 1 ou 2,
**caractérisée en ce**
**que** la bride de raccordement (6) et la bride de stabilisation (7) sont fabriquées à partir de matériaux différents.

4. Bride hybride selon l'une quelconque des revendications 1 à 3,
**caractérisée en ce**
**que** la pièce tubulaire (5) présente au moins un palier.

5. Bride hybride selon l'une quelconque des revendications 1 à 4,
**caractérisée en ce**
**que** la bride de raccordement (6) présente, à distance de la pièce tubulaire (5), en particulier au niveau d'un bord (13) situé à l'extérieur, un collet (12) faisant saillie du côté intérieur (11), lequel s'étend en partie ou en totalité dans la direction périphérique.

6. Bride hybride selon l'une quelconque des revendications 1 à 5,
**caractérisée en ce**
**que** le côté intérieur (11) de la bride de raccordement (6) et le côté intérieur (14) de la bride de stabilisation (7) sont réalisés de manière complémentaire, en particulier de telle manière que la bride de stabilisation (7) soit disposée entre le collet (12) et la pièce tubulaire (5).

7. Bride hybride selon l'une quelconque des revendications 1 à 6,
**caractérisée en ce**
**que** la bride de stabilisation (7) présente, au niveau de son côté extérieur (18) opposé à la bride de raccordement (6), un collet d'ouverture (19) entourant au moins en partie l'ouverture (8), lequel entoure au moins en partie la pièce tubulaire (5).

8. Bride hybride selon l'une quelconque des revendications 1 à 7,
**caractérisée en ce**
**qu'**au moins deux zones de liaison (15) de ce type et espacées l'une de l'autre sont prévues.

9. Bride hybride selon l'une quelconque des revendications 1 à 8,
**caractérisée en ce**
**que** les au moins deux zones de liaison (15) sont disposées de manière répartie dans la direction périphérique.

10. Bride hybride selon l'une quelconque des revendications 1 à 9,
**caractérisée en ce**
**qu'**au moins une zone de liaison (15) de ce type présente une ouverture de liaison (16).

11. Bride hybride selon l'une quelconque des revendications 1 à 10,
**caractérisée en ce**
**que** la bride de raccordement (6) et/ou la bride de stabilisation (7) s'étendent le long de plans parallèles.

12. Bride hybride selon l'une quelconque des revendications 1 à 11,
**caractérisée en ce**
**que** la bride de raccordement (6) et la bride de stabilisation (7) sont fixées l'une contre l'autre.

13. Elément de découplage (1) pour un système d'échappement comprenant une bride hybride (3) selon l'une quelconque des revendications 1 à 12.
